Europäisches Patentamt

European Patent Office

Office européen des brevets

(19)

(11) Numéro de publication: **0 145 610**
A2

(12)
# DEMANDE DE BREVET EUROPEEN

(21) Numéro de dépôt: 84402597.3

(22) Date de dépôt: 14.12.84

(51) Int. Cl.⁴: **F 16 K 35/16**, F 16 K 31/06

(30) Priorité: 15.12.83 FR 8320095

(43) Date de publication de la demande: 19.06.85
Bulletin 85/25

(84) Etats contractants désignés: **DE GB IT**

(71) Demandeur: **INDUSTRIA S.A., 28 Avenue Clara, F-94420 Le Plessis-Trevise (FR)**

(72) Inventeur: **Meura, André, 1 Impasse du Moulin, F-77400 Gouvernes (FR)**
Inventeur: **Lesage, Marc Christian, 4 avenue de la Trémouille, F-94100 St Maur (FR)**
Inventeur: **Legoff, Jackie Emile, 87 rue de la Forêt de Jouy, F-77330 Lesigny (FR)**

(74) Mandataire: **Viard, Jean, Cabinet VIARD 28 bis, avenue Mozart, F-75016 Paris (FR)**

(54) Vanne électromagnétique bistable à autoverrouillage.

(57) Vanne électromagnétique bistable à autoverrouillage sur deux positions, respectivement ouverte et fermée.

Selon l'invention, un verrou (7) commandé par une bobine (18) coulisse sur un palier (6) formant logement pour des billes (11, 12) qui peuvent descendre dans des gorges prévues dans la tige (4) du pointeau (3) pour bloquer celui-ci dans une position déterminée.

Applications: aéronefs.

EP 0 145 610 A2

## VANNE ELECTROMAGNETIQUE BISTABLE A AUTOVERROUILLAGE -

La présente invention a pour objet une vanne électromagnétique bistable à autoverrouillage destinée en particulier,
mais non exclusivement, à être montée dans les appareils
aéronautiques.

Les vannes électromagnétiques bistables sont connues et
utilisées depuis longtemps. Elles présentent la caractéristique de posséder deux états stables qui sont respectivement la position fermée dans laquelle le clapet est maintenu contre son siège et la position ouverte dans lequelle
le clapet est éloigné de son siège. Dans leur forme de
réalisation la plus simple, le pointeau solidaire du clapet
est manoeuvré par un électroaimant et est rappelé en permanence dans l'une des deux positions par un ressort de
rappel. Quand la tension est appliquée sur l'électroaimant,
la vanne prend une position stable ouverte et lorsque la
tension est supprimée, le ressort referme la vanne ce qui
constitue la deuxième position stable. Dans ce type de
vanne, il subsiste toutefois une incertitude quant à l'état
de la vanne lors de l'ouverture ou la fermeture du circuit
d'alimentation électrique de l'électroaimant.

Un premier objet de la présente invention est la réalisation d'une vanne électromagnétique bistable à autoverrouillage, c'est à dire présentant des moyens de verroui -
lage des deux positions ouverte ou fermée, ces moyens de
verrouillage étant liés au fonctionnement propre de la vanne.

Un second objet de la présente invention est une vanne du
type précédent dans laquelle, quel que soit l'évènement
qui se produit (par exemple, interruption ou rétablissement
du courant électrique dans le ou les électro-aimants), la
vanne reste dans la position qu'elle avait avant que ne
survienne cet évènement, de manière à lever toute incertitude sur la position de la vanne.

2

Selon la présente invention, l'électrovanne bistable du type comprenant un clapet monté sur un pointeau coulissant dans un guide à l'intérieur du corps de la vanne, le clapet pouvant venir prendre appui sur son siège par translation du pointeau, au moins un électro-aimant et au moins un ressort de rappel, est caractérisée en ce que le pointeau est solidaire d'une tige de commande, la tige passant à l'intérieur d'un palier, solidaire du corps de la vanne, autour duquel est monté coulissant un verrou, ledit palier présentant des rainures à l'intérieur desquelles sont montées des billes, le déplacement du verrou étant commandé par un électro-aimant et par un second ressort de rappel, de sorte qu'il vienne obturer, dans certaines positions, les cages de billes constituées par les rainures du palier et des gorges formées dans la tige de commande.

Ainsi, les deux positions de la vanne sont verrouillées par la descente des billes dans les gorges correspondant, sur la tige, aux deux positions stables.

Les flux engendrés par les bobines sont de même sens. Or, la pièce polaire est telle qu'elle est saturée par l'action d'une seule bobine. De ce fait, l'action des deux bobines, simultanément, engendre un flux résultant qui n'est pas supérieur au flux d'une seule bobine. Donc, le flux résultant par bobine est inférieur à celui généré lors de l'action d'une seule bobine.

Dans ces conditions, l'alimentation simultanée accidentelle des deux bobines ne se traduit par aucune action ni sur la tige de commande, ni sur le verrou, de sorte que ces organes demeurent dans leur position initiale.

D'autres caractéristiques et avantages de la présente invention apparaîtront au cours de la description qui va suivre d'un mode de réalisation particulier, donné uniquement à titre d'exemple non limitatif, en regard des dessins qui représentent :

- la Fig.1, une vue en coupe d'une vanne selon l'invention, la partie supérieure représentant la position ouverte et la partie inférieure représentant le changement de position des organes conduisant à la position fermée ;
- la Fig.2, schématiquement la position ouverte verrouillée ;
- la Fig.3, dans les mêmes conditions la position fermée verrouillée ;
- la Fig.4, une position intermédiaire existant lors de l'ouverture de la vanne ;
- la Fig.5, une position intermédiaire existant lors de la fermeture de la vanne, et
- la Fig.6, le cas dans lequel les deux bobines sont alimentées simultanément.

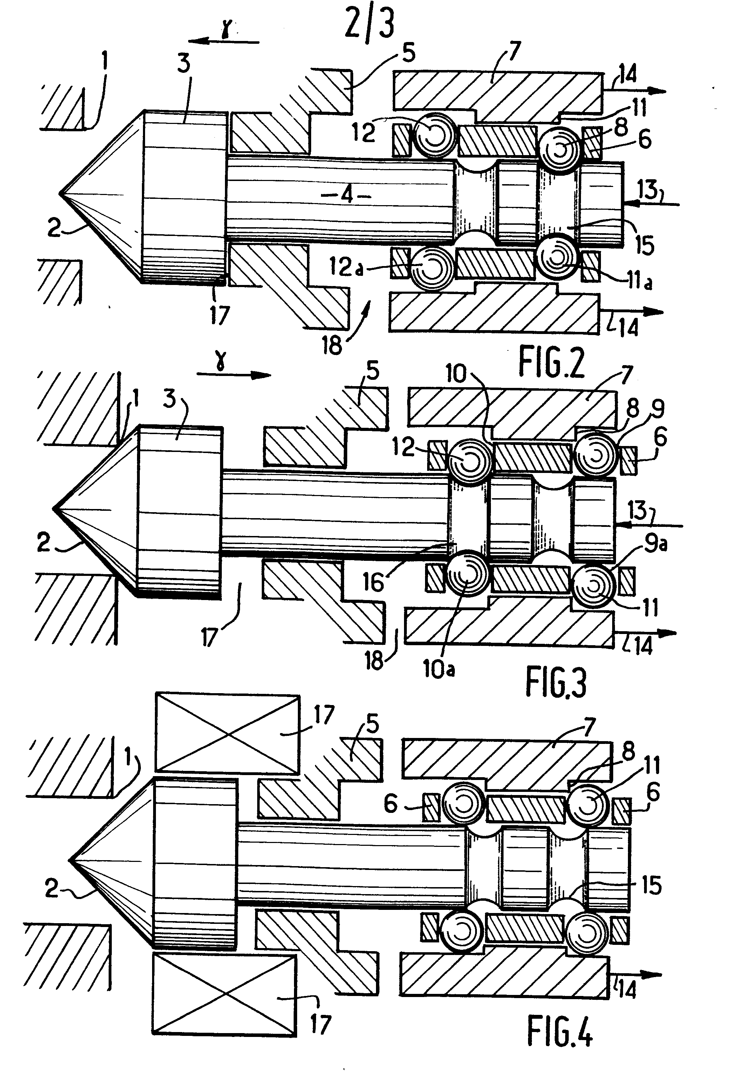

Le fonctionnement de la vanne sera mieux compris en commençant par la description des schémas des Figs. 2 à 6, qui reprennent les seuls éléments essentiels à la compréhension du fonctionnement, représentés en coupe, ces éléments étant à symétrie de révolution.

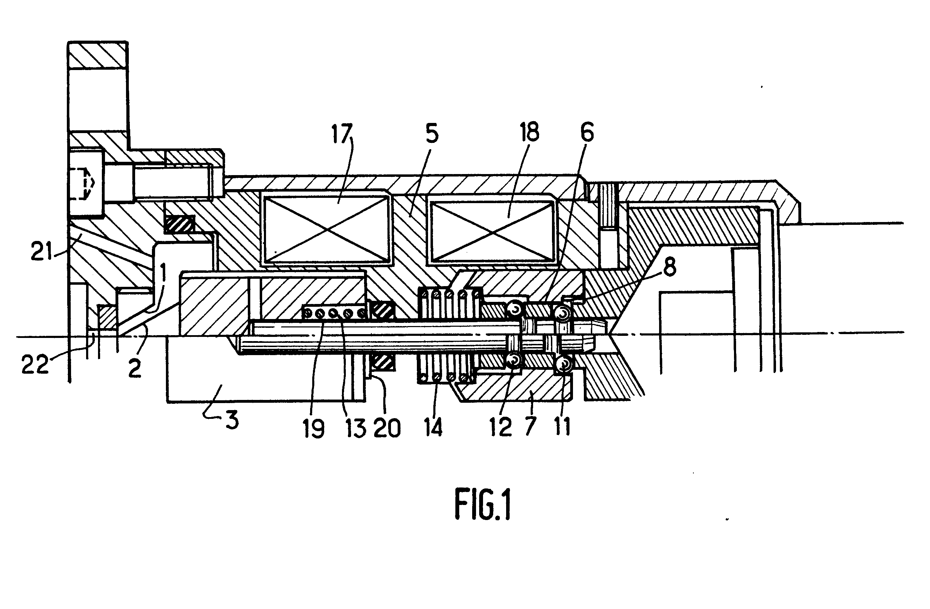

Sur ces schémas, la vanne se compose essentiellement d'un siège 1 contre lequel vient porter, en position de fermeture le clapet conique 2 solidaire d'un pointeau 3 dont la tige 4 passe à l'intérieur d'une pièce polaire 5 puis, à travers un palier 6 solidaire, comme la pièce polaire, du corps de la vanne. Le palier 6 est entouré par un verrou 7 cylindrique présentant à l'intérieur une bague 8 dont le diamètre interne est inférieur au diamètre interne du reste du verrou. La longueur de la bague 8 est sensiblement égale à la course maximale du pointeau 3. Le palier 6 présente au moins une ouverture radiale 9,9a dans laquelle est montée librement une bille 11,11a. De préférence, au moins une seconde ouverture radiale 10,10a renferme au moins une seconde bille 12,12a. Pratiquement, le nombre de billes peut être quelconque. Sur la tige 4 s'exerce, en permanence, une force de rappel 13 symbolisée par la flèche portant la même référence, provenant d'un ressort 13 (Fig.1) disposé entre la vanne et le pointeau 3, et tendant à appliquer le clapet 2

4

contre le siège 1. De même, une force de rappel s'exerce en permanence dans le sens indiqué par la flèche 14 sur le verrou 7. Cette force est générée par un ressort de rappel 14 (Fig.1) disposé entre le verrou 7 et la pièce polaire 5. Elle tend à repousser le verrou vers l'arrière de la vanne, soit vers la droite des figures.

La Fig.2 représente schématiquement la vanne en position ouverte. Le pointeau est en position arrière et le clapet 2 est décollé de son siège 1. Sous l'influence de la poussée du ressort 14, le verrou 7 s'est déplacé vers l'arrière, les billes 11,11a ...etc, pénètrent dans la gorge 15 de la tige 4 et la bague 8 interdit leur remontée hors de la gorge 15, la bague 8 venant en quelque sorte obturer la cage de chacune des billes. Dans cette position, l'entrefer 17 entre le pointeau 3 et la pièce polaire 5 est sensiblement égal à zéro, alors que l'entrefer 18 est maximal.

La Fig.3 représente la position fermée de la vanne. Dans ce cas, le clapet 2 est appliqué contre son siège 1 par la force 13. L'entrefer 17 est maximum alors que l'entrefer 18 est sensiblement égal à la moitié de sa valeur maximale.

A partir de la position fermée (Fig.3), on ouvre la vanne de la façon suivante (Fig.4) : la bobine 17 étant alimentée, le pointeau 3 est attiré par la pièce polaire 5, la tige 4 étant déplacée vers l'arrière de la vanne (vers la droite de la Fig.). Lorsque la gorge 15 se présente au-dessous des billes 11, celles-ci tombent dans la gorge. Les mouvements du verrou sont ainsi libérés et, sous l'influence du ressort 14, celui-ci se déplace vers la droite de la Fig. de sorte que la bague 8 vienne empêcher toute remontée. La vanne est alors verrouillée comme dans le cas de la Fig.2, en position ouverte.

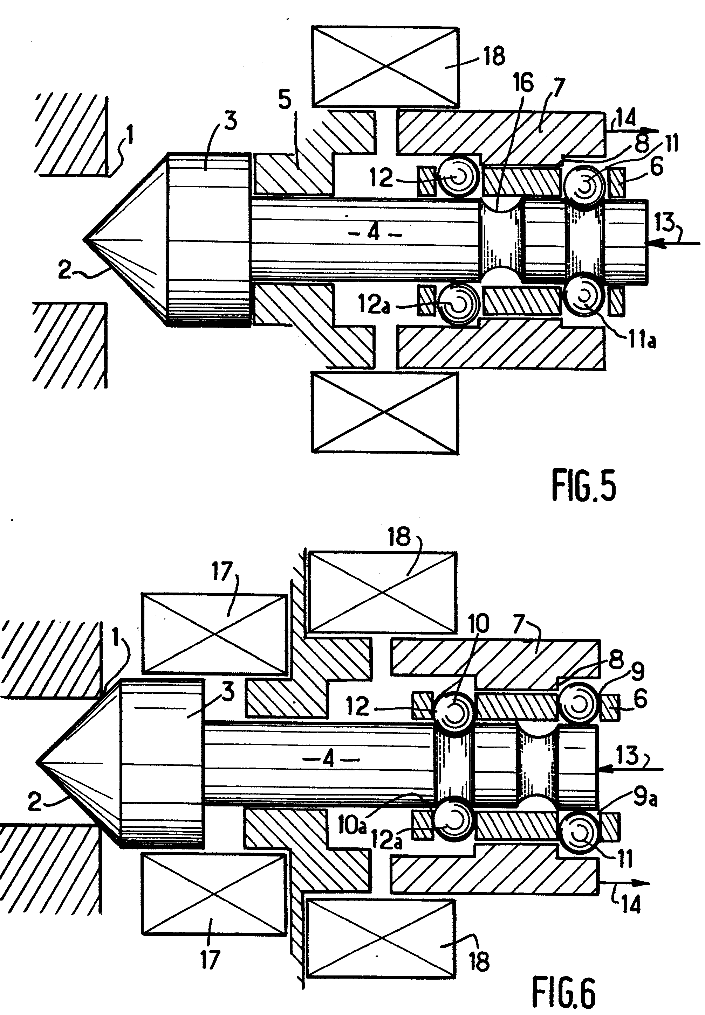

La Fig.5 représente le passage de la position ouverte (Fig.2) à la position fermée (Fig.3). La bobine 18, dont le champ est orienté vers la gauche de la Fig. est alimentée et génère un champ axial agissant sur le verrou 7 qui se déplace vers la gauche de la Fig. à l'encontre de la force 14. Les billes 11 sont libérées et, sous l'influence du ressort 13, le clapet 2 est appliqué contre le siège 1 ce qui ferme la vanne, la tige 4 solidaire du pointeau 3 se déplaçant vers la gauche de la Fig.5. Après ce mouvement, on obtient la position représentée sur la Fig.3

La Fig.6 représente un cas particulier d'accident au cours duquel les deux bobines 17 et 18 sont alimentées simultanément. Ce cas ne relève pas du fonctionnement normal de la vanne puisque l'ouverture de celle-ci est obtenue par alimentation de la bobine 17 qui produit un déplacement du pointeau vers la droite de la Fig. alors que la fermeture est obtenue en alimentant la bobine 18. Ce cas peut toutefois se produire par suite d'une fausse manoeuvre ou d'une défaillance du circuit électrique. Comme dans les cas précédents, cette occurence ne se traduit par aucun changement de l'état de la vanne. Sur la Fig.6, la vanne est fermée. Lorsque les bobines 17 et 18 sont activées en même temps, le verrou 7 bloque les billes 12 et le pointeau 3 ne peut pas bouger. L'entrefer 18 est égal à la moitié de l'entrefer maximal alors que l'entrefer 17 est maximum, les entrefers portant les mêmes références que les bobines correspondantes. De plus, la masse du verrou 7 étant inférieure à la masse du pointeau 3, le verrou va faire un mouvement vers la gauche de la Fig. avant que le pointeau n'ait pu se déplacer et par suite débloquer les billes. Dans ce mouvement, la bague 8 vient obturer le logement des billes 12 de sorte que le blocage du pointeau est aussitôt rétabli. Lorsque la vanne est préalablement en position ouverte, comme dans le cas représenté sur la Fig.5, l'alimentation de la bobine 17 ne produit aucune action sur le pointeau 3, l'entrefer étant nul.

De plus, comme indiqué précédemment, les flux générés par les deux bobines 17,18 saturent la pièce polaire 5, la résultant des flux est faible et le ressort 13 peut

6

être taré de manière à ce qu'à entrefer maximum, sa force soit inférieure à celle d'une bobine seule.

En raison de la conception mécanique et magnétique du dispositif, aucune action ne se produit lorsque, pour une raison quelconque, les deux bobines sont simultanément alimentées.

Dans le cas d'un aéronef ou d'une fusée, les organes mécaniques de la vanne peuvent également, en certaines circonstances, être soumis à des accélérations de plusieurs "g" avec une modification du sens d'action du verrou. Lorsque la vanne est fermée, comme sur la Fig.3, le produit de la masse du verrou 8 par l'accélération peut devenir supérieur à la résistance du ressort 14, la masse du pointeau étant soumise à la même accélération de sorte que le produit de ces deux grandeurs soit supérieur à la résistance du ressort 13. Si l'accélation " $\gamma$ " est orientée vers la droite de la Fig.3, le verrou 7 maintient le blocage du pointeau par verrouillage de la chambre des billes 11, en renforçant l'action du ressort 14, le pointeau est immobilisé sur son siège. Lorsque l'accélération est dirigée en sens opposé, elle se combine avec l'action du ressort 13. Dans les deux cas, la position de la vanne est inchangée.

Lorsque la vanne est en position ouverte (Fig.2), le blocage du pointeau 3 est assuré par verrouillage des billes 12 lorsque l'accélération " $\gamma$ " est orientée vers la gauche de la Fig.2 . La force d'accélération s'oppose à l'action du ressort 14 mais lui est supérieure, de sorte que le verrou 7 a tendance à se déplacer vers la gauche en bloquant les billes 12. Lorsque l'accélération est orientée vers la droite, le pointeau 3 est appliqué contre la pièce polaire 5. A nouveau, la position de la vanne n'est pas modifiée par l'existence d'une forte accélération.

La Fig.1 représente, en coupe par un plan vertical, à sa partie supérieure une vanne selon l'invention en position ouverte et, en coupe partielle, à sa partie inférieure, la même vanne en position fermée. Les organes précédemment mentionnés portent les mêmes références que sur les Figs. 2 à 6. On distingue notamment sur cette figure le siège 1, le clapet 2, la tige 4 du pointeau 3 ainsi que la pièce polaire 5 et les deux bobines 17 et 18 des électro - aimants de commande. Un ressort hélicoïdal 13 est disposé dans un logement 19 du pointeau 3 et maintenu dans ce logement par une rondelle 20. Le fluide entre par un canal 21 et sort par l'orifice 22, obturable par le clapet 2. Des joints d'étanchéité, non référencés, sont disposés dans les endroits convenables. Un second ressort hélicoïdal 14 est disposé entre le verrou 7 qui présente dans sa partie avant (sur la gauche de la Fig.) un alésage de dimension appropriée et la pièce polaire 5. Ce ressort 14 exerce en permanence sur le verrou 7 une force dirigée de la gauche vers la droite de la Fig. Par contre, le ressort 13 exerce en permanence une force sur le pointeau 3 qui est orientée de la droite vers la gauche. En position fermée, le pointeau 3 est en butée sur son siège 1 sous la pression du ressort 13. Cette disposition offre l'avantage, pour une électrovanne, de rattraper l'usure du siège et donc d'assurer, durant toute la vie de la vanne, une bonne étanchéité de la fermeture. En position ouverte ou arrière, l'effort du pointeau n'ayant sur le verrou aucune résultante parallèle à l'unique axe de liberté du verrou, le blocage est absolu. Au contraire, par l'effet des frottements, l'effort du pointeau va dans le sens d'un verrouillage renforcé du verrou.

En position ouverte (partie supérieure de la Fig.) la position de la tige 4 est bloquée par la descente des billes 11 dans la gorge 15. Ce blocage est obtenu par action du ressort 14 qui amène le verrou dans la position représentée après mouvement de la tige 4. Les billes 12 n'interviennent que lorsqu'il y a action simultanée sur les deux électro-aimants ,pour bloquer le verrou.

8

Le déplacement , vers la gauche, du verrou permet le dégagement des billes 11 et, en position intermédiaire, les billes 11 et 12 glissent sur la tige 4. Le ressort 13 pousse le pointeau 3 vers l'avant. A ce moment, comme celà apparait sur la Fig.4, le mouvement du verrou est lui-même bloqué par les billes 11 et 12 qui portent sur la périphérie de la tige 4. Dans cette position intermédiaire, le verrou 7 est inopérant alors que la tige 4 se dirige vers la gauche de la Fig.1 jusqu'à ce que les billes 12 tombent dans la gorge 16 (partie inférieure de la Fig.). Le verrou 7 peut alors, sous l'influence de la bobine 18, se déplacer vers la gauche de manière à ce que la bague 8 vienne fermer la chambre des billes 12 immobilisant ainsi le pointeau, contre l'action du ressort 14. Durant toutes ces opérations, les billes restent fixes en position longitudinale. Elles ne peuvent que monter sur la tige 4 ou descendre dans les gorges 15 et 16.

Il va de soi que de nombreuses variantes peuvent être introduites, notamment par substitution de moyens techniques équivalents, sans sortir pour celà du cadre de la présente invention.

REVENDICATIONS -

1°) - Vanne électromagnétique bistable du type comprenant un clapet monté sur une tige de commande coulissante dont la translation est commandée par un électro-aimant d'une part et par un ressort de rappel, d'autre part, caractérisée en ce qu'un second électro-aimant (18) et un second ressort de rappel (14) commandent le déplacement d'un verrou coulissant (7), le verrou (7) coopérant par une bague (8) avec des billes (11;12) pouvant s'insérer dans des gorges (15,16) formées dans la tige (4).

2°) - Vanne électromagnétique selon revendication 1, caractérisée en ce que les électro-aimants (17,18) génèrent deux champs de même sens à l'intérieur d'une pièce polaire (5), le champ de l'électro-aimant (17) ramenant le pointeau (3) portant le clapet (2) vers une position à entrefer nul, le champ de l'électro-aimant (18) ramenant le verrou (7) dans une position à entrefer nul.

3°) - Vanne électromagnétique selon l'une quelconque des revendications 1 ou 2, caractérisée en ce que la tige de commande (4) est solidarisée avec le pointeau (3), un ressort de rappel (13) tendant à appliquer le clapet (2) contre son siège (1).

4°) - Vanne électromagnétique selon l'une quelconque des revendications précédentes, caractérisée en ce qu'elle présente une position ouverte et une position fermée dans laquelle les mouvements du verrou (7) sont inhibés par la descente des billes (11) dans la gorge (15), l'entrefer de l'électro-aimant (18) étant alors égal à la moitié de sa valeur maximale, le verrou (7) présentant successivement trois positions respectivement de blocage, de non blocage et de liberté.

5°) - Vanne électromagnétique selon l'une quelconque des revendications, caractérisée en ce que le verrou (7) de forme générale cylindrique coulisse sur un palier fixe (6) présentant des ouvertures radiales (9,10) dans lesquelles sont incluses les billes (11,12), les gorges (15,16) venant au-dessous des rainures (9,10) au cours du fonctionnement.

6°) - Vanne électromagnétique selon l'une quelconque des revendications précédentes, caractérisée en ce que les flux engendrés par les bobines (17 et 18) sont de même sens, la pièce polaire (5) étant saturée par une seule bobine de sorte que le flux résultant de l'alimentation simultanée des bobines (17,18) est inférieur à celui généré par l'alimentation d'une seule bobine.

7°) - Vanne électromagnétique selon l'une des revendications précédentes, caractérisée en ce que lorsque les bobines (17) et (18) sont alimentées simultanément alors que la vanne est fermée, le verrou (7) se déplace vers l'avant de la vanne, les billes (12,12a) tombent dans la gorge (16) ce qui immobilise le pointeau (3) dans sa position avant de fermeture.

FIG.1

0145610

0145610

FIG.2

FIG.3

FIG.4

0145610

FIG.5

FIG.6